**Europäisches Patentamt**

**European Patent Office**

**Office européen des brevets**

(19)

(11) Publication number : **0 511 802 A2**

## (12) EUROPEAN PATENT APPLICATION

(21) Application number : **92303760.0**

(22) Date of filing : **27.04.92**

(51) Int. Cl.⁵ : **G02F 1/1335,** G09G 3/36

(30) Priority : **30.04.91 US 693755**

(43) Date of publication of application :
**04.11.92 Bulletin 92/45**

(84) Designated Contracting States :
**DE FR GB IT**

(71) Applicant : **International Business Machines
Corporation
Old Orchard Road
Armonk, N.Y. 10504 (US)**

(72) Inventor : **Edgar, Albert Durr
3912 Eton Lane
Austin, Texas 78727 (US)**

(74) Representative : **Killgren, Neil Arthur
IBM United Kingdom Limited Intellectual
Property Department Hursley Park
Winchester Hampshire SO21 2JN (GB)**

(54) **Display apparatus.**

(57) The effective resolution of a colour display device such as a liquid crystal display device is enhanced by offsetting one of the colour components. A three component colour signal 50 being used to generate a colour image in conjunction with a pel pattern is modified to horizontally displace, or delay, a single colour component 54 of the colour signal by substantially one half pel relative to the remaining colour components. The component pels 44 displaying this image are offset half a pel in the opposite direction to bring the images back into alignment, but with the pel sites horizontally out of alignment. This single component can be vertically offset in a similar manner relative to the remaining colour components. The effect of this colour component offset is to increase the effective resolution of the output display device, as seen by the eye, without adding significantly to the complexity of the image generating apparatus.

FIG. 2

EP 0 511 802 A2

This invention relates to visual display apparatus, and more specifically to colour solid state display devices.

Visual displays are used in numerous, and distinct, areas of technology From the well known technologies of television, movie projectors, and CRT computer displays to the newer applications of high-definition TV, and liquid crystal displays (LCD), higher resolution, and thus higher quality displayed images, is a continuing goal.

Higher resolution generally leads to higher device costs, as there tends to be a proportional relationship between increased resolution and the requirement for increased system components to achieve such resolution. As a result, although a higher resolution device might be technically achievable, the associated cost makes the resulting product unattractive from an end-user, consumer point-of-view. This problem is particularly apparent in large screen TVs and liquid crystal projectors, where a high resolution is required due to the relatively larger screen size (the larger an image, the higher the resolution needed to achieve a 'good' picture).

Display resolution is defined and measured in terms of a quantitative unit known as a 'pel', which literally stands for a 'picture element'. Thus the number of picture units per unit. length is typically expressed in pels/inch or pels/centimetre. Today's general purpose computer CRT devices may have a horizontal and vertical resolution of approximately 100 pels/inch.

Monochrome solid state display devices are devices in which each picture element is generated by a distinct solid state device. Whether a given solid state device is on or off determines whether the corresponding pel on the display is on or off. This is distinguishable from conventional CRT-type devices in which a modulated electron beam is used to turn all respective display pels on or off at the face of a chemically treated screen. Using solid state technology allows for more compact displays. This is because the 'gun' used in conventional CRT devices, used to generate the electron beam, is no longer needed. A long axis was required between the gun and the CRT face, in order that the electron beam could be scanned across the entire face of the CRT screen from a single point-source. The bulge in the back of some TV sets and/or computer display devices exemplify this physical requirement/limitation. Solid state devices have eliminated this electron beam and corresponding long axis requirement, thus allowing for more compact visual display devices.

Recent improvements in solid state display devices are exemplified by the liquid crystal display (LCD) technology examples of which are described in US patent 4,699,469 to Larsen and US patent 4,873,516 to Castleberry. This technology is seeing increased usage in 'lap-top' personal computers, as well as compact large-screen TV projectors. The LCD technology at a given resolution is still more expensive than a conventional CRT device at the same resolution. This has prevented full realisation of the advantages of LCD compactness, because of its associated higher costs.

Colours display devices add level of complexity to image generation techniques. Three-colour combinations can be used to generate the full spectrum of colour perceivable by the human eye. Additive-colour techniques use red (R), green (G), and blue (B) primary colours, in various combinations, to achieve other colours. For example, adding red to blue would yield purple; adding green to blue would yield cyan. Various methods are used to mix these colours in a visual display device. One technique is to subdivide each pel into distinct areas in which a given primary colour can be placed or activated. Because a pel is relatively small compared to the picture being viewed as a whole, the eye will integrate the individual primary colours of a given pel, and see the resulting colour combination, rather than the distinct primary colours actually being displayed in each pel subdivision. A second technique actually overlays the primary colours one on top of another by using three distinct monochrome displays. These displays are arranged behind an assembly of dichroic mirrors so that the virtual images of the three displays mutually register. Thus, the corresponding pels of each display overlay each other, and the dichroic mirrors are sequenced so one display modulates red, a second modulates green, and a third modulates blue.

Another technique for pel placement on a display is called interlacing, where the odd numbered horizontal rows of pels are in vertical alignment with one another and the even numbered horizontal rows of pels are in vertical alignment with one other. However, the odd numbered rows of pels are placed interstitially between the even numbered rows of pels. This interlacing technique is used in conventional CRT television technology. For example, during display, all the even rows are refreshed with image detail, then all the odd rows.

A colour image may be defined using either the above described R-G-B coordinate system or a Y-I-Q coordinate system. These coordinate systems are generally discussed in US Patent 4,710,801. In a Y-I-Q coordinate system, the Y component represents the luminance, or grey-scale, information and the I and Q components represent the chrominance, or colour, information.

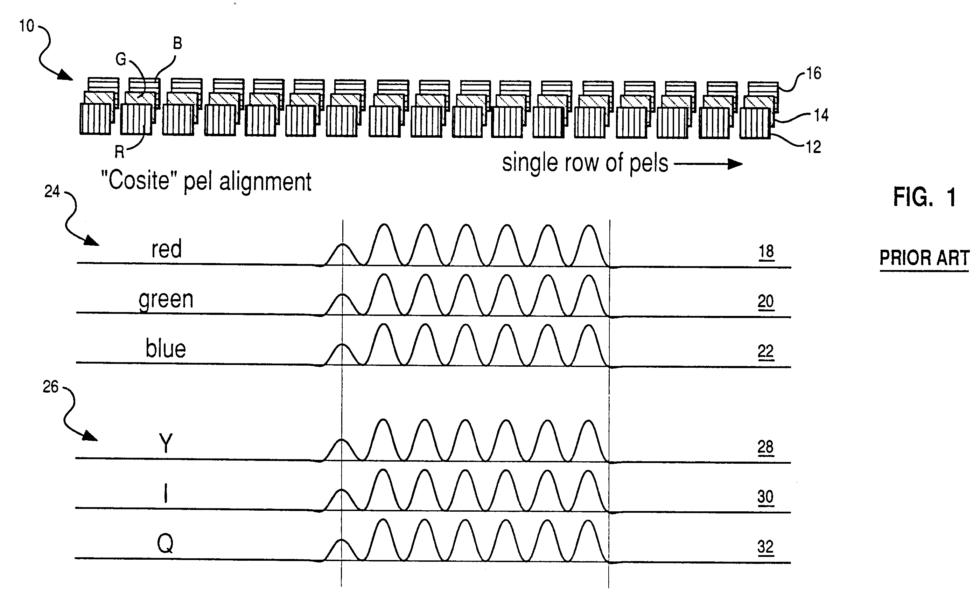

LCD projectors used for projecting large images, for example a large screen high-definition TV, have recently been introduced to the market. These projectors are expected to replace conventional CRT technology, in that they offer near perfect colour convergence, near perfect geometric accuracy, near perfect resolution at the projection's corners because of small virtual lens apertures. They also have reduced electromagnetic radiation, are unaffected by magnetic fields, have potentially improved brightness and colour saturation, etc. Typically, these devices are built from three separate monochrome .screens such that the virtual image pels of all three colours are in perfect registration with one another('cosite' pel alignment). The pel grid is so sharp that the image appears obscured, just as viewing a newspaper photograph through a magnifier causes the dots to make the image disappear. The grid also creates moire effects with image detail. Figure 1 shows shows a perspective view of a single row of pels 10, where the three colours R 12, G 14, and B 16 are perfectly registered (Note that this representation is a perspective view, showing a 3-d like view, but the R-G-B pels are exactly overlayed on top of each other in 2-dimensional space). The brightness profiles of this pel grid are shown at 24, where it can be seen that each red 18, green 20, and blue 22 images are in phase with each other. Because of this phase synchronization, the Y, I, and Q components also have eye-objectionable high frequency components contained therein.

Y, I, and Q is a linear transformation of the R, G, and B components. Y corresponds to the sum of the R, G, and B colours, and so represents the black and white component of the image. I and Q correspond to differences between R, G, and B colours, and so represent the colour information added to the black and white component of the image. The human eye sees detail in the Y component, but is blind to fine detail in the I and Q components. This characteristic of human vision is the motivation to express the physical RGB image as a YIQ signal in Figure 1. The YIQ signals indicate how the human eye will actually respond to a full colour signal, and in Figure 1, since the Y component contains the pel grid signal, the eye will see this signal.

Visual input devices such as cameras, also have a requirement to offer higher resolutions for the image which they capture. A technique is known in the art for increasing the effective resolution in the horizontal direction for a solid state camera without increasing the number of picture elements aligned in the horizontal direction. In this technique, the red and blue sensing pels are in registration with each other, but the green sensing pels are horizontally interstitially placed between the red and blue sensing pels. The net of this is that to a black and white image, there are pels at twice as many horizontal locations as the number of pels in the sensor of any single colour, and hence to a purely black and white image the number of pels, and thus the resolution, is effectively doubled. Colours resolution, i.e. the resolution to the I and Q visual channels is actually reduced, but this is generally acceptable because the human eye does not perceive this loss.

Attempts have been made to improve solid state output device resolution in a cost-effective manner(i.e. without correspondingly increasing the number of output picture elements). US patent 4,834,506 to Demke et al addresses the problem of improving the user perceived quality of an LCD device. The techniques employed by this teaching optimize various internal LCD device parameters in order to build a better LCD device. This improved LCD device results in improved display contrast, at the cost of considerable rework of the device after initial assembly.

It is accordingly an object of the invention to improve the resolution of a colour solid state display without incurring substantial additional cost either as a result of a considerable increase in number of pels, or in working existing pels.

According to the invention there is provided display apparatus comprising an array of picture elements (pels), each picture element comprising first, second third colour component devices, said first and second colour component devices being aligned to produce substantially cosite virtual pel display devices, and said third colour component being aligned to produce a virtual pel display device at a position offset from said cosite virtual pel display devices.

There is further provided a method for manufacturing an improved output display device comprising a plurality of first colour component devices, second colour component devices and third colour component devices disposed on a plurality of substrates, said method comprising: disposing said first colour component devices and said second colour component devices to produce a virtual image at substantially cosite registration; and disposing said third colour component devices to produce a virtual image at a registration offset from said cosite registration.

In order that the invention may be well understood, preferred embodiments thereof will now be described with reference to the accompanying drawings, in which:

Figure 1 shows the effect of moire patterns in prior art LCD displays using cosite pel alignment.

Figure 2 shows a single colour component being offset in the horizontal direction, with the resultant colour signals.

Figure 3 shows the location of a single colour component delay circuit.

Figure 4 shows a single colour component being offset in both the horizontal and vertical directions.

Figure 5 shows a single colour component being offset in both the horizontal and vertical directions and resulting grid.

Figure 6 shows an optical generation system used to generate virtual images.

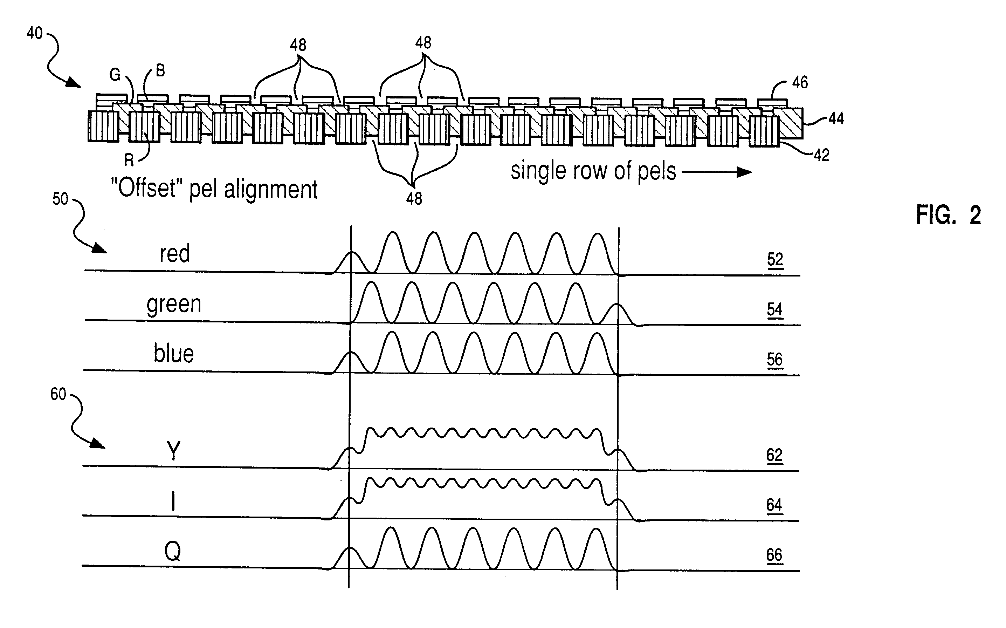

The preferred method of this disclosure offsets the green LCD one half pel from the red and blue LCD, and similarly delays the LCD driving analog green signal one half pel. As shown in Figure 2, a single row of pels at 40 has the red component 42 and the blue component 46 substantially in horizontal alignment.

The green component 44 has been offset in the LCD matrix by substantially one half pel in the horizontal direction. It will be understood by those of ordinary skill in the art that various sizes and shapes of solid state device display areas are possible, for example circles, rectangles, etc. The embodiment as shown should not be construed to limit the actual shape of the solid state device display area being claimed in this invention. In the preferred embodiment the solid state devices 42, 44, and 46 are liquid crystal display elements (LCDs). Further, any slight deviation from one-half pel would achieve results similar to an exact one-half pel shift of the green colour component. Further, all three colours could be offset relative to each other in a manner consistent with minimizing luminance raster noise as taught by this invention. Raster noise (or 'sharp grid effects') is that signal in the visual image caused by the raster, or grid, in which the pels are placed, even when there is no image detail. The desired result of this invention is that the pel shift of the green component 44 is such that the blank space 48 between the individual red areas 42 and blue areas 46 is overlayed by the green component 44.

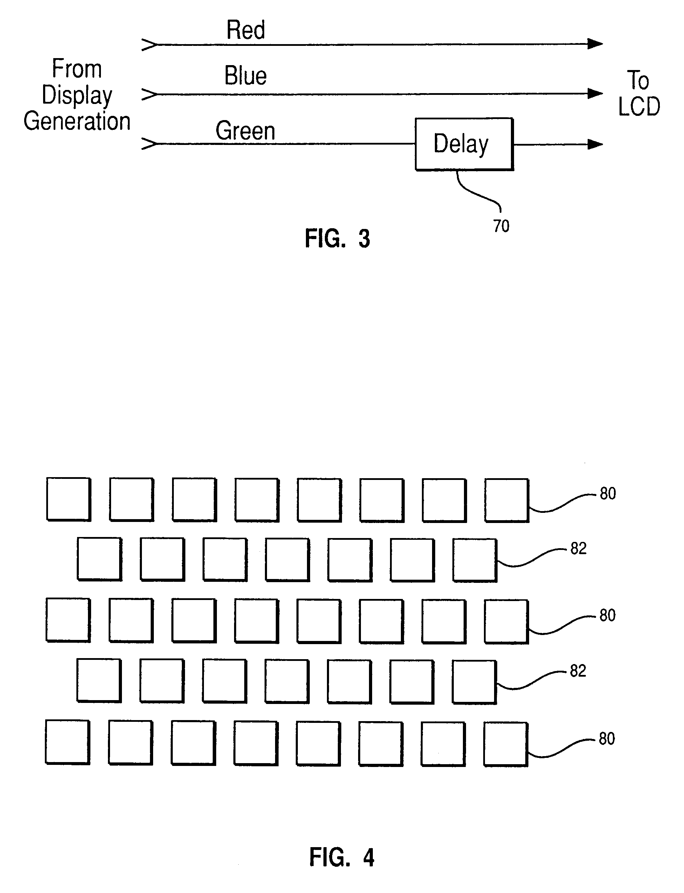

Additionally, to properly drive the green solid state devices, the driving signal must be offset by an amount similar to the amount which the green device was offset. This delay, as shown in Figure 3 at 70, thus allows for the green driving signal to still coincide with the corresponding green solid state device physical location. This delay is easily achieved through known techniques, such as a cascaded RC circuit, to shift the timing of the green driving signal prior to sampling for the pel driver. The delay could also be achieved by picking a sampling edge of a different clock phase to generate the green driving signal. Thus, the resultant delay is achieved at virtually no increase in cost. Various software programming techniques known to those of ordinary skill in the art could also be used to generate the requisite delay in the green driving signal for digitized images.

Referring again to Figure 2, the offset pel alignment at 40, in combination with the appropriate red signal 52, delayed green signal 54 and blue signal 56 result in an image as seen by the eye at 60. This resultant image has Y-I-Q components as shown at 62, 64, and 66, respectively. Only the luminance, or Y component, of the image is seen by the eye at high frequencies. Further, the luminance, as defined by the human eye's sensitivity, is comprised of approximately one-half green, and the other half red and blue. Therefore, at high spatial frequencies, the eye sees only the blend of the two offset grids, as shown at 62. The effect is to double the effective pel resolution, make the individual pels disappear, and cancel the sharp grid effect or raster noise shown at 28 of Figure 1.

The two colour channels I and Q are seen by the eye at much lower resolution, but of these two, the I component is similarly improved, as shown at 64 of Figure 2. Only the Q (green-magenta) axis, to which the eye is least sensitive at high frequencies, still has the high frequency pel sampling noise. The eye will not see this component unless the image is viewed at a very close distance. Thus, although the individual R, G, and B components still have sharp pels, the image as seen by the human eye, which sees detail only in the Y component, appears smooth, and of higher resolution.

Figure 4 shows an alternate embodiment which further offsets the green solid state device in the vertical direction as well. The effect is to essentially double the effective resolution of the image as seen by the eye in both axis, theoretically giving the effect of nearly quadrupling the total number of pels.

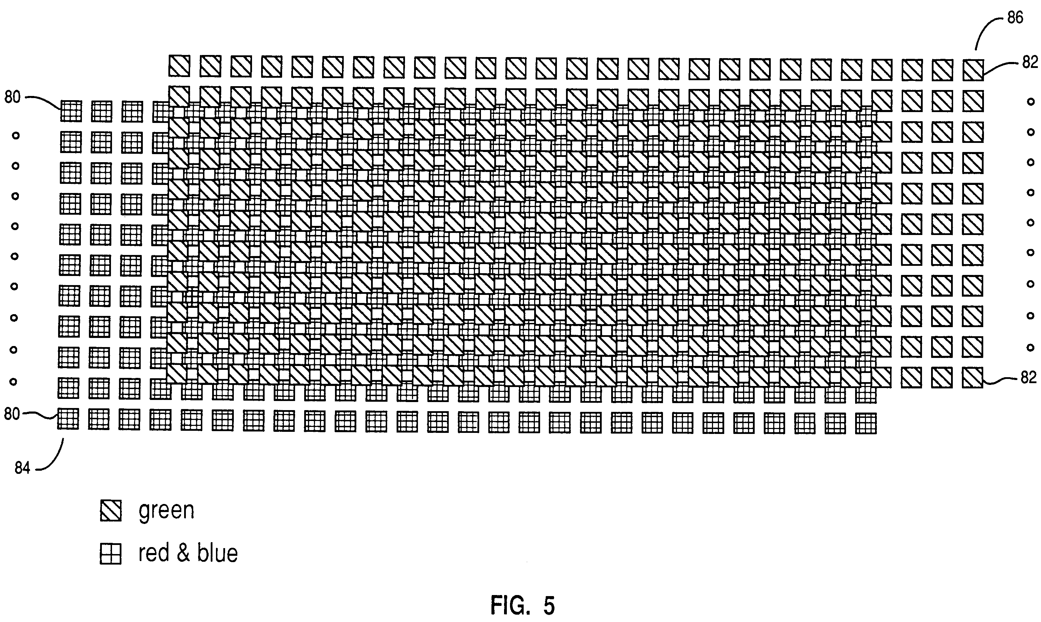

Offsetting in both directions is accomplished by offsetting horizontally and vertically as separate operations. Offsetting horizontally is already described above as requiring a simple time delay. Offsetting vertically, orthogonal to the direction of scan, requires scan line interpolation. This can be done most simply by averaging the two adjacent scan lines, or more accurately by combining several scan lines above and below the interpolated line weighted according to a sinc (sin(x)/x) filter, as is known in the art. A particular problem with scan line interpolation comes when the orthogonal image is interlaced. In this case, the problem is addressed by the scan line doubling needed for Improved Definition TV (IDTV) and will not be described here. Continuing with Figure 4, In the preferred embodiment, the red and blue components of the image are registered at cosite, or overlapping, locations to form multiple horizontal rows of red and blue cosite pels, as shown at 80. The green component of the image has been shifted in both the horizontal and vertical direction, resulting in horizontal displacement pels 82. If the distance between each of rows 80 were reduced, the horizontal displacement pels 82 would partially overlap the cosite pels 80, as shown in Figure 5. This figure 5 further shows the red and blue grid 84 of cosite pel locations 80, and the green grid 86 of displacement pel 82 locations.

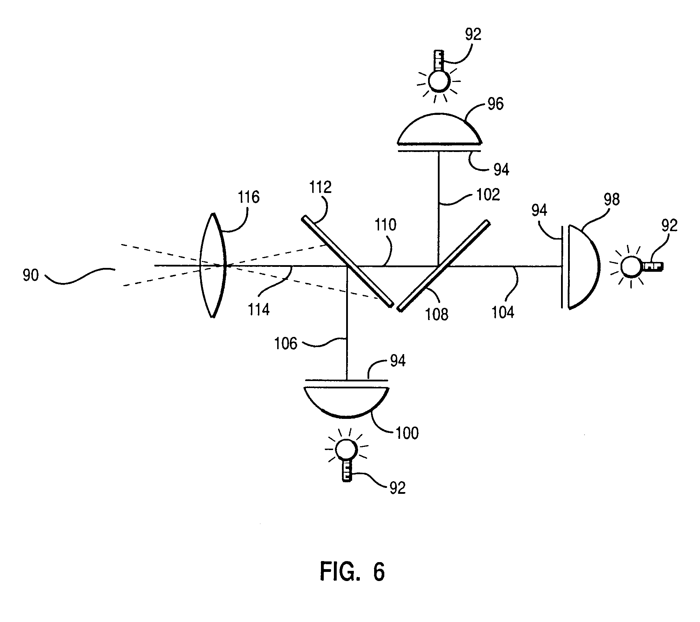

Figure 6 shows the preferred embodiment of generating a virtual image seen at 90 having the characteristics as described above. This virtual image seen at 90, where the blue and red pels are coincident, or cosite, and the green pels are displaced relative to the cosite pels, could be an image projected by a liquid crystal display onto a large screen, for example. Light sources 92 are used to generate light which passes through liquid crystal substrates 94. These substrates have liquid crystal devices which are used to block or pass light at a particular location, thus passing the image component for a given colour. Field lenses 96, 98, and 100 are used to focus the light from sources 92 onto the imaging lens 116. The red light component of the image to be displayed 102 is combined with the green light component 104, using a dichroic prism 108, to create a resulting yellow component of the image at 110. This yellow component 110 is further combined with the blue component of the image 106, using a dichroic prism at 112 to produce the white light component 114 of the image, the white light component having all colour components of the image. These dichroic prisms selectively reflect or transmit different colours. This white light image component 114 is gathered by lens 116 to project the ultimate virtual image 90. Background reference material on optics systems in general can be found in "Modern Optical Engineering" by Warren J. Smith, McGraw-Hill Publishing, 1966, hereby incorporated by reference as background material.

Alternate embodiments of the above described image generation system could combine the liquid crystal devices 94 being used to block or pass the three primary colours of red, green, and blue into a single substrate, and then rearranging the lenses, filters, etc. to accommodate the different spatial orientation used to achieve the same end result of projecting a virtual image on a direct view device.

## Claims

1. Display apparatus comprising an array of picture elements (pels), each picture element comprising first, second third colour component devices, said first and second colour component devices being aligned to produce substantially cosite virtual pel display devices, and said third colour component being aligned to produce a virtual pel display device at a position offset from said cosite virtual pel display devices.

2. Apparatus as claimed in claim 1 wherein said offset position is displaced substantially one half pel distance from said substantially cosite position.

3. Apparatus as claimed in claim 1 or claim 2 wherein said offset position is displaced in a substantially horizontal direction.

4. Apparatus as claimed in claim 1 or claim 2 wherein said offset position is displaced in a substantially vertical direction.

5. Apparatus as claimed in claim 1 or claim 2 wherein said offset position is displaced both horizontally and vertically.

6. Apparatus as claimed in any preceding claim, in which said first, second and third colour component devices are disposed respectively on first, second and third substrates.

7. Apparatus as claimed in any of claims 1 to 5, in which said colour component devices are disposed on a single substrate,
   said first colour component device and a second colour component device being disposed at a substantially cosite position on said substrate, and
   said third colour component device being disposed at said offset position on said substrate.

8. Apparatus as claimed in claim 6 wherein said first and second colour cosite locations are disposed in successive horizontal and vertical locations to form a first grid and said third colour offset locations are disposed in successive horizontal and vertical locations to form a second grid, and wherein said second grid overlaps said first grid.

9. Apparatus as claimed in claim 8 wherein successive horizontal rows of said first grid are vertically aligned with adjacent horizontal rows.

10. Apparatus as claimed in any preceding claim wherein said third colour component device is used to generate the colour green.

11. A method for improving the visually perceptible resolution of a virtual image, comprising,
    generating a first colour component of said virtual image,
    generating a second colour component of said virtual image sampled substantially in phase with said first colour component, and
    generating a third colour component of said virtual image sampled substantially out of phase with said first and second colour components.

12. A method as claimed in claim 11 wherein said third colour component is generated substantially 180 degrees out of phase with said first and second colour components.

13. A method as claimed in claim 11 or claim 12 wherein said third colour component out of phase generation is in a substantially horizontal direction.

14. A method as claimed in claim 11 or claim 12 wherein said third colour component out of phase generation is in a substantially vertical direction.

15. A method as claimed in claim 11 or claim 12 wherein said third colour component out of phase generation is in both substantially horizontal direction and vertical directions.

16. A method for manufacturing an improved output display device comprising a plurality of first colour component devices, second colour component devices and third colour component devices disposed on a plurality of substrates, said method comprising:

disposing said first colour component devices and said second colour component devices to produce a virtual image at substantially cosite registration; and

disposing said third colour component devices to produce a virtual image at a registration offset from said cosite registration.

17. A method for manufacturing an improved output display device comprising a plurality of first colour component devices, second colour component devices and third colour component devices disposed on a substrate, said method comprising:

disposing said first colour component devices and said second colour component devices at substantially cosite positions on said substrate; and

disposing said third colour component devices at substantially offset positions on said substrate.

18. A method as claimed in claim 16 or claim 17 wherein said third colour component devices are used to generate the colour green.

"Cosite" pel alignment

single row of pels →

FIG. 1

PRIOR ART

red _18_

green _20_

blue _22_

Y _28_

I _30_

Q _32_

EP 0 511 802 A2

"Offset" pel alignment

single row of pels →

FIG. 2

red                                                      52

green                                                    54

blue                                                     56

Y                                                        62

I                                                        64

Q                                                        66

EP 0 511 802 A2

Red

From
Display
Generation

Blue

Green

Delay

To
LCD

70

**FIG. 3**

80

82

80

82

80

**FIG. 4**

green

red & blue

FIG. 5

FIG. 6